# EUROPÄISCHE PATENTSCHRIFT

(11) **EP 3 242 978 B1**
(45) Veröffentlichungstag und Bekanntmachung des Hinweises auf die Patenterteilung: **07.11.2018**
(21) Anmeldenummer: 16700109.8
(22) Anmeldetag: 06.01.2016
(51) Int. Cl.: E03C 1/02, F16L 27/08

(54) **S-ANSCHLUSS ZUR VERBINDUNG EINER WASSERLEITUNG MIT EINER ARMATUR**
S-SHAPED CONNECTION FOR CONNECTING A WATER PIPE TO A FITTING
RACCORD EN S POUR RACCORDER UNE CONDUITE D'EAU À UN ÉLÉMENT DE ROBINETTERIE

(30) Priorität: 07.01.2015 DE 202015100038 U
(43) Veröffentlichungstag der Anmeldung: 15.11.2017
(73) Patentinhaber: Bernhard, Frank, 25451 Quickborn (DE)
(72) Erfinder: Bernhard, Frank, 25451 Quickborn (DE)
(74) Vertreter: Hauck Patentanwaltspartnerschaft mbB
(86) Internationale Anmeldenummer: PCT/EP2016/050119
(87) Internationale Veröffentlichungsnummer: WO 2016/110503

(56) Entgegenhaltungen:
- EP-A2- 0 992 632
- DE-A1- 2 532 648
- DE-A1- 3 711 429
- DE-A1-102013 205 250
- DE-U1-202014 006 320

## Beschreibung

Die vorliegende Erfindung betrifft einen S-Anschluss zur Verbindung einer Wasserleitung mit einer Armatur. Bekannte S-Anschlüsse zu diesem Zweck haben ein 1/2"-Außengewinde zur Verbindung mit einer Wasserleitung und ein 3/4"-Außengewinde zur Verbindung mit einer Armatur. Eine Längsachse des 1/2"-Außengewindes und eine Längsachse des 3/4"-Außengewindes sind parallel und in einem Abstand voneinander angeordnet.

Dadurch sind die S-Anschlüsse insgesamt S-förmig, und durch Anpassen des Drehwinkels nach dem Einschrauben des 1/2"-Außengewindes in ein Innengewinde eines Wasserleitungsanschlusses kann die seitliche Position (also die Anordnung der Längsachse des 3/4"-Außengewindes in der Ebene der Wand) des mit der Armatur zu verbindenden 3/4"-Außengewindes justiert werden. Der Abstand zwischen den beiden Längsachsen wird wegen dieser Justage-Möglichkeit auch als Verstellbarkeit bezeichnet. Ein genaues Justieren der seitlichen Position des 3/4"-Außengewindes ist insbesondere wichtig, um eine Armatur mit zwei in einem genormten Abstand voneinander angeordneten Anschlüssen für Warm- und Kaltwasser problemlos und exakt waagerecht montieren zu können.

Zusätzlich zu dieser seitlichen Justierbarkeit durch Verdrehen des S-Anschlusses ist für eine einwandfreie Montage der Armatur eine Anordnung des 3/4"-Außengewindes im richtigen Abstand von der Wand erforderlich. Zumeist ist hierzu ein Abstand zwischen einer Wandscheibe und dem 1/2"-Außengewinde des S-Anschlusses zu überbrücken. Als Wandscheibe wird ein abgewinkeltes, mit Befestigungslaschen versehenes Endstück der Wasserleitung.

Um den genannten Abstand zu überbrücken, werden sogenannte Hahnverlängerungen eingesetzt, die mit einem 1/2"-Außengewinde in die Wandscheibe eingeschraubt werden und an ihrem anderen Ende ein 1/2"-Innengewinde aufweisen, in das je nach Größe des zu überbrückenden Abstands das 1/2"-Außengewinde des S-Anschlusses oder eine oder mehrere weitere Hahnverlängerungen eingeschraubt werden. Die Hahnverlängerungen sind in vielen unterschiedlichen Längen in 5 mm-Abstufungen erhältlich, z.B. von 10 mm bis 50 mm Länge.

Trotz dieser zahlreichen verfügbaren Größen gelingt auf diese Weise nicht immer eine exakte Positionierung des 3/4"-Außengewindes: Steht dieses Gewinde zu weit aus der Wand hervor, kann es nicht vollständig von einer Rosette der Armatur verdeckt werden. Dies wird als optischer Mangel empfunden, zumal der freiliegende Gewindeabschnitt schwer zu reinigen ist. Steht das Gewinde nicht weit genug aus der Wand hervor, kann die Armatur unter Umständen nicht dichtend montiert werden, was ebenfalls inakzeptabel ist.

Diese Nachteile wiegen besonders schwer, wenn die Wasserzuleitungen für Kalt- und Warmwasser nicht exakt gleich tief in der Wand versenkt sind, da in diesem Fall unterschiedlich lange Hahnverlängerungen verwendet werden müssen. Da die Hahnverlängerungen wie erwähnt nur in 5 mm-Schritten angeboten werden, lassen sich die genannten Differenzen nicht vollständig ausgleichen und es bleiben verschieden lange Gewindeabschnitte sichtbar. Unter Umständen kann die Armatur dann auch nicht hinreichend parallel zur Wand montiert werden.

Schließlich ist am geschilderten Stand der Technik nachteilig, dass insbesondere bei einer Kombination mehrerer Hahnverlängerungen ein erheblicher Montageaufwand entsteht. Jede Gewindeverbindung muss einzeln abgedichtet werden, in der Regel mittels Hanf und Gewindekitt oder Teflonband. Gelingt die exakte Anordnung des 3/4"-Außengewindes dabei nicht auf Anhieb, muss anschließend aufwendig nachgebessert werden. Für die optimale Montage einer Standardarmatur können so schnell zwei Arbeitsstunden oder mehr anfallen.

Des Weiteren verbleiben immer wieder optische und funktionelle Mängel, im ungünstigsten Fall durch Undichtigkeiten, die schwere Folgeschäden nach sich ziehen können.

Die Druckschriften EP 0 992 632 A2, DE 37 11 429 A1, DE 25 32 648 A1 und DE 20 2014 006 320 U1 zeigen jeweils einen S-Anschluss mit den Merkmalen des Oberbegriffs des Anspruchs 1.

Aus der Druckschrift DE 24 12 767 A1 ist ein Unterputz-S-Anschluss bekannt geworden, der ebenfalls die Merkmale des Oberbegriffs des Anspruchs 1 aufweist. Er wird bei der Vormontage mit einem kleineren Außengewinde in eine Wandscheibe eingeschraubt, mit einer Schutzhülle umgeben und eingemauert. Bei der Endmontage wird ein verlängerter Schenkel des Unterputz-S-Anschlusses, der ein größeres, durchlaufendes Außengewinde aufweist und aus der Wand hervorsteht, auf das benötigte Maß gekürzt und mit der Armatur verbunden.

Aus der Druckschrift DE 10 2013 205 250 A1 ist ein Rohranschlussadapter bekannt geworden, mit dem ebenfalls eine Wasserleitung mit einer Armatur verbunden werden kann. Ein wandseitiger Abschnitt des Rohranschlussadapters weist ein relativ langes Außengewinde zur Verbindung mit einer Wasserleitung auf. Armaturseitig weist der Rohranschlussadapter einen Steckverbindungsabschnitt auf. Der Steckverbindungsabschnitt ist über ein spezielles, scheibenförmiges Koppelteil mit dem wandseitigen Abschnitt verbunden, so dass seine Längsachse relativ zur Längsachse des wandseitigen Abschnitts seitlich verschoben werden kann.

Ausgehend vom erläuterten Stand der Technik liegt der Erfindung die Aufgabe zugrunde, einen S-Anschluss der eingangs genannten Art bereitzustellen, mit dem die Montage von Bad- und Küchenarmaturen vereinfacht werden kann.

Diese Aufgabe wird gelöst durch den S-Anschluss mit den Merkmalen des Anspruchs 1. Vorteilhafte Ausgestaltungen bilden die Gegenstände der Unteransprüche.

Der S-Anschluss dient zur Verbindung einer Wasserleitung und einer Armatur und hat
- ein 1/2"-Außengewinde zur Verbindung mit der Wasserleitung und
- ein 3/4"-Außengewinde zur Verbindung mit der Armatur, wobei
- eine Längsachse des 1/2"-Außengewindes und eine Längsachse des 3/4"-Außengewindes parallel und in einem Abstand voneinander angeordnet sind und
- das 1/2"-Außengewinde eine Länge von mindestens 30 mm aufweist.

Der S-Anschluss dient als Verbindungsstück zwischen einer typischerweise unter Putz einer Wand eines Hauses angeordneten Wasserleitung und einer Aufputzarmatur. Die zu montierende Armatur kann zum Beispiel eine Bad- oder Küchenarmatur sein, etwa eine Wannen-, Dusch- oder Spülsteinbatterie, die sowohl einer Warm- wie auch einer Kaltwasserversorgung bedarf. Die Warm- und Kaltwasseranschlüsse der Armatur haben einen genormten Abstand von 150 mm. Mit Hilfe zweier erfindungsgemäßer S-Anschlüsse wird eine passgenaue Verbindung zwischen den beiden Armaturenanschlüssen und der Warm- und Kaltwasserleitung hergestellt.

Das 1/2"-Außengewinde des S-Anschlusses kann direkt in die eingangs erwähnte Wandscheibe der Wasserleitung eingeschraubt werden, da die große Länge des 1/2"-Außengewindes von 30 mm oder mehr so bemessen ist, dass in den meisten Fällen keine Hahnverlängerung zur Überbrückung eines verbleibenden Abstands mehr benötigt wird. Es ist auch nicht länger notwendig, aus einer Vielzahl mitgeführter Hahnverlängerungen ein mehr oder minder passgenaues Exemplar auszuwählen. Stattdessen kann ausgemessen werden, wie groß der Abstand zwischen der Wandscheibe und der erwünschten Anordnung des 3/4"-Außengewindes in der jeweiligen Einbausituation ist und das 1/2"-Außengewinde kann einfach auf das exakt benötigte Maß gekürzt werden.

Dies ermöglicht eine exakte Positionierung des 3/4"-Außengewindes relativ zu der Wand, so dass es vollständig von der Rosette der Armatur verdeckt ist. Die gesamte Anordnung ist dadurch sowohl optisch ansprechend als auch besonders einfach zu reinigen. Gleichzeitig steht das passgenau montierte 3/4"-Außengewinde weit genug aus der Wand hervor, um eine dichtende Montage der Armatur zu gewährleisten. Bei der Erfindung ergeben sich darüber hinaus keine Probleme bei nicht exakt gleich tief in der Wand versenkten Kalt- und Warmwasserleitungen, weil stets eine millimetergenaue Längenanpassung des S-Anschlusses möglich ist.

Des Weiteren wird durch den erfindungsgemäßen S-Anschluss der Montageaufwand wesentlich verringert, denn es entfällt die Notwendigkeit der Verwendung und Abdichtung einer oder mehrerer Hahnverlängerungen. Wandseitig muss nur noch die Gewindeverbindung zwischen der Wandscheibe und dem 1/2"-Außengewinde abgedichtet werden. Auch ist es für einen Monteur nicht länger notwendig, eine Vielzahl von Hahnverlängerungen unterschiedlicher Länge mitzuführen.

In einer bevorzugten Ausgestaltung weist das 1/2"-Außengewinde eine Länge von mindestens 50 mm bzw. von mindestens 80 mm auf. Möglich ist auch eine Länge im Bereich von 80 mm bis 120 mm, bevorzugt von etwa 100 mm. Hierdurch kann selbst eine besonders tief in einer Wand angeordnete Wandscheibe mit Hilfe des S-Anschlusses schnell und mit geringem Zeitaufwand mit einer Armatur verbunden werden.

In einer Ausgestaltung hat der S-Anschluss einen wandseitigen Anschlussabschnitt, der das 1/2"-Außengewinde aufweist und mit einer Rohrsäge kürzbar ist. Dadurch ist das Kürzen besonders einfach. Sollte der am S-Anschluss verbleibende Anfang des 1/2"-Außengewindes von der Rohrsäge beschädigt worden sein, kann er einfach mit einer Feile wieder gangbar gemacht werden.

In einer Ausgestaltung erstreckt sich das 1/2"-Außengewinde über die gesamte Länge des wandseitigen Anschlussabschnitts. Der wandseitige Anschlussabschnitt erstreckt sich bis zum s-förmigen Verbindungsstück. Dadurch kann die Gesamtlänge des S-Anschlusses nach Kürzen des wandseitigen Anschlussabschnitts besonders klein gewählt werden.

In einer Ausgestaltung liegt der Abstand der Längsachsen im Bereich von 3 mm bis 40 mm. Mit steigendem Abstand der Längsachsen wird eine größere Verstellbarkeit erreicht, sodass auch Warm- und Kaltwasserleitungen mit der Armatur verbunden werden können, deren Abstand besonders stark von 150 mm abweicht. Für die meisten Einbausituationen praxistauglich ist ein Abstand im Bereich von 5 mm bis 10 mm.

In einer Ausgestaltung besteht der S-Anschluss aus Messing, in einer weiteren Ausgestaltung ist er alternativ oder zusätzlich verchromt. Der S-Anschluss ist dann besonders langlebig. Es können unterschiedliche Messing-Legierungen verwendet werden, insbesondere Rotguss.

In einer Ausgestaltung weist das 1/2"-Außengewinde des S-Anschlusses eine Riffelung auf. Die Riffelung trägt dazu bei, dass ein auf das 1/2"-Außengewinde aufgebrachtes Dichtmaterial, insbesondere Hanf oder Teflonband, beim Einschrauben des S-Anschlusses in eine Wandscheibe tief in den Zwischenraum zwischen Innen- und Außengewinde eindringt, so dass eine besonders hohe Dichtigkeit insbesondere bei späterem Nachjustieren des S-Anschlusses erzielt wird.

In einer Ausgestaltung weist das das 3/4"-Außengewinde eine Länge im Bereich von 10 mm bis 30 mm auf.

In einer Ausgestaltung beträgt eine Wandstärke des S-Anschlusses im Bereich des 1/2"-Außengewindes und/oder im Bereich des 3/4"-Außengewindes 1,5 mm bis 3 mm. Dies stellt einen guten Kompromiss zwischen einfacher Kürzbarkeit, Durchflussmenge und Stabilität dar.

In einer Ausgestaltung ist konzentrisch zu dem 3/4"-Außengewinde ein 1/2"-Innengewinde angeordnet. Das 1/2"-Innengewinde kann eine beliebige Länge im Bereich von ca. 10 mm bis zur Länge des 1/4"-Außengewindes aufweisen. In dieser Ausgestaltung kann der S-Anschluss wie eine Hahnverlängerung zwischen einer Wasserleitung und einer beliebigen Armatur, die an das 1/2"-Innengewinde angeschlossen wird, eingesetzt werden. Die Armatur kann beispielsweise ein Eckventil oder ein Wasserhahn sein. Durch die Verstellbarkeit kann auch in diesem Fall ein seitlicher Versatz herstellt werden, um eine exakte Anordnung der Armatur zum Beispiel in Horizontal- oder Vertikalrichtung zu ermöglichen. Das 3/4"-Außengewinde wird in diesem Fall nicht für eine wasserdichte Verbindung benötigt, kann jedoch gegebenenfalls anderweitig genutzt werden, zum Beispiel zur Befestigung einer Rosette.

Ein Ausführungsbeispiel der Erfindung wird nachfolgend anhand von zwei Figuren näher erläutert. Es zeigen:
- Fig. 1: einen erfindungsgemäßen S-Anschluss in einer perspektivischen Ansicht,
- Fig. 2: den S-Anschluss aus Figur 1 in einem beispielhaften Einbauzustand in einer vereinfachten, teilweise geschnittenen Darstellung, und
- Fig. 3: einen S-Anschluss nach dem Stand der Technik in einer typischen Einbausituation unter Zuhilfenahme einer Hahnverlängerung.

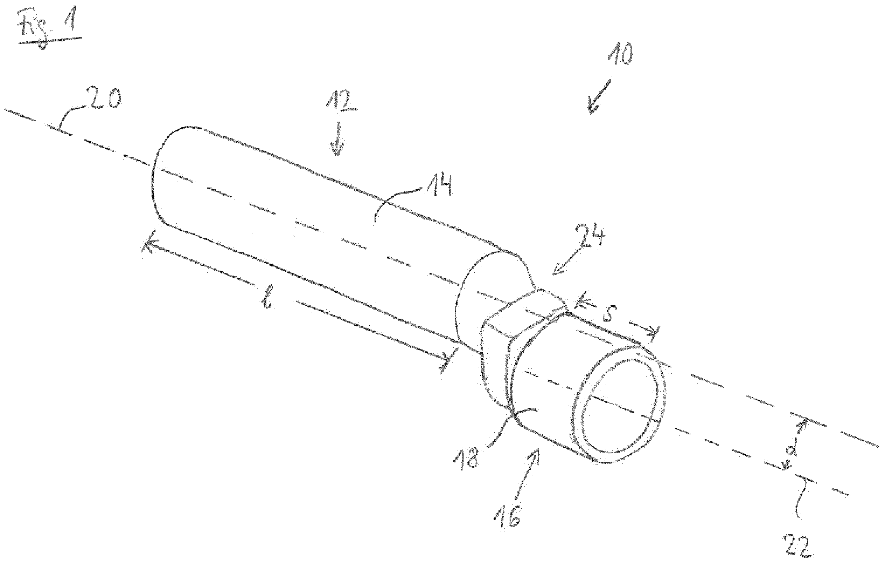

Figur 1 zeigt einen S-Anschluss 10 aus verchromtem Messing. Der S-Anschluss 10 hat einen wandseitigen Anschlussabschnitt 12 mit einem sich über dessen gesamte Länge 1 erstreckenden 1/2"-Außengewinde 14 zur Verbindung mit einer Wandscheibe sowie einen armaturseitigen Anschlussabschnitt 16 mit einem sich über dessen gesamte Länge s erstreckenden 3/4"-Außengewinde 18 zur Verbindung mit einer Armatur. Die Länge 1 beträgt mindestens 30 mm. Das 1/2"-Außengewinde 14 kann sich über die gesamte Länge 1 erstrecken.

Eine Längsachse 20 des 1/2"-Außengewindes und eine Längsachse 22 des 3/4"-Außengewindes sind parallel und in einem Abstand d voneinander angeordnet. Ein Verbindungsabschnitt 24 zwischen den beiden Anschlussabschnitten 12, 16 weist eine S-Form auf. Der Abstand d der beiden Längsachsen 20, 22 voneinander ist die Verstellbarkeit des S-Anschlusses 10. Der wandseitige Anschlussabschnitt 12 mit dem 1/2"-Außengewinde 14 ist mit Hilfe einer nicht gezeigten Rohrsäge beliebig kürzbar.

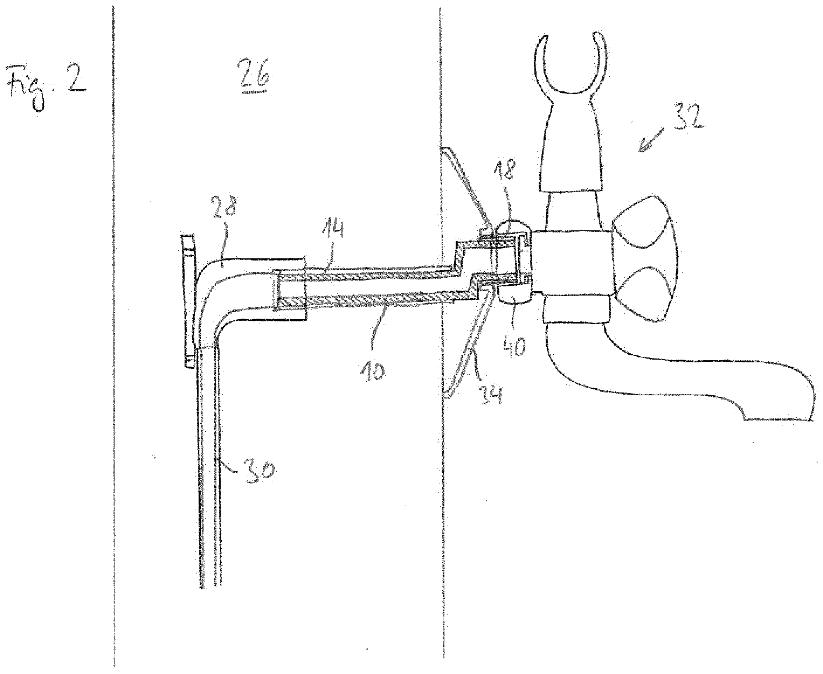

Figur 2 zeigt den S-Anschluss 10 aus Figur 1 als Verbindung zwischen einer in einer Wand 26 befindlichen Wandscheibe 28 einer Wasserleitung 30 und einer Wannenarmatur 32 in einer vereinfachten Darstellung, teilweise im Schnitt. Das 1/2"-Außengewinde 14 des S-Anschlusses 10 ist in ein Innengewinde der Wandscheibe 28 eingeschraubt.

Die Armatur 32 ist mit dem 3/4"-Außengewinde 18 des S-Anschlusses 10 verbunden. Das 3/4"-Außengewinde 18 des S-Anschlusses ragt gerade soweit aus der Wand 26 heraus, dass es durch die Rosette 34 der Armatur 32 vollständig abgedeckt ist.

Es ist nur eine Gewindeverbindung abzudichten, nämlich zwischen der Wandscheibe 28 und dem 1/2"-Außengewinde 14. Die Verbindung zwischen dem S-Anschluss 10 und der Armatur 32 wird wie üblich mit einer auf das 3/4"-Außengewinde 18 aufgeschraubten Überwurfmutter 40 der Armatur 32 hergestellt, so dass der S-Anschluss 10 mit der Armatur 32 verspannt ist. Zwischen S-Anschluss 10 und Armatur 32 kann ein Dichtungsring eingesetzt werden. Die Verbindung der Wandscheibe 28 und der Armatur 32 ist allein mit dem erfindungsgemäßen S-Anschluss 10 realisiert, der den Abstand passgenau überbrückt.

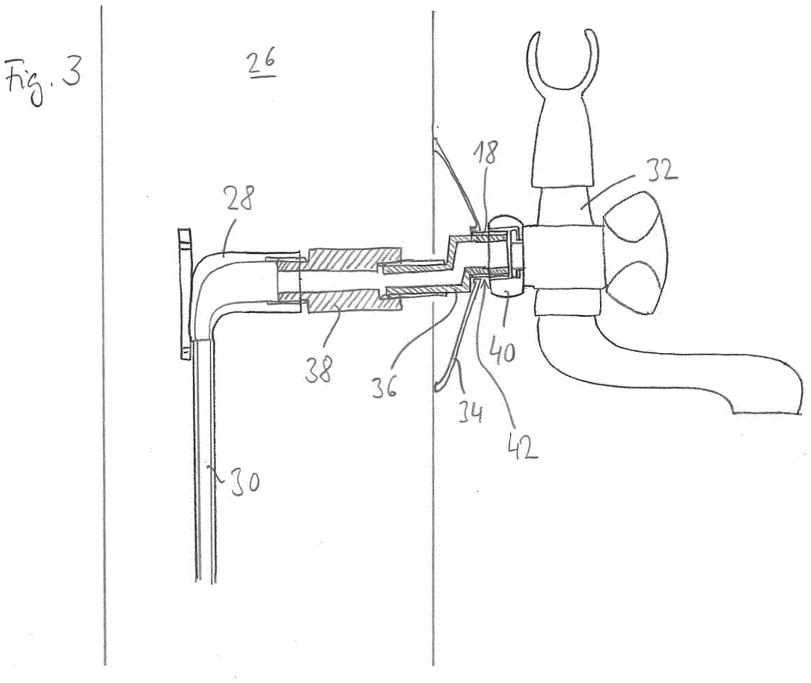

Figur 3 zeigt einen S-Anschluss 36 nach dem Stand der Technik in einer typischen Einbausituation. Die Verbindung zwischen einer in einer Wand 26 befindlichen Wandscheibe 28 einer Wasserleitung 30 und dem S-Anschluss 36 wird unter Zuhilfenahme einer Hahnverlängerung 38 hergestellt. Die Länge der Anordnung aus Hahnverlängerung 38 und S-Anschluss 36 übersteigt jedoch den zu überbrückenden Abstand zwischen der Wandscheibe 28 und der Armatur 32, sodass das 3/4"-Außengewinde 18 des S-Anschlusses 36 nur teilweise von der Rosette 34 der Armatur 32 abgedeckt wird. Es verbleibt ein Spalt 42 zwischen Rosette 34 und Überwurfmutter 40, was als optischer Mangel empfunden wird. Der Montageaufwand ist aufgrund der zusätzlichen, abzudichtenden Gewindeverbindung zwischen der Hahnverlängerung 38 und dem S-Anschluss 36 hoch, insbesondere wenn Nachbesserungen erforderlich werden.

## Patentansprüche

1. S-Anschluss (10) zur Verbindung einer Wasserleitung (30) und einer Armatur (32) mit
• einem 1/2"-Außengewinde (14) zur Verbindung mit der Wasserleitung (30) und
• einem 3/4"-Außengewinde (18) zur Verbindung mit der Armatur (32), wobei
• eine Längsachse (20) des 1/2"-Außengewindes (14) und eine Längsachse (22) des 3/4"-Außengewindes (18) parallel und in einem Abstand (d) voneinander angeordnet sind, **dadurch gekennzeichnet, dass**
• das 1/2"-Außengewinde (14) eine Länge (1) von mindestens 30 mm aufweist.

2. S-Anschluss (10) nach Anspruch 1, **dadurch gekennzeichnet, dass** die Länge (1) des 1/2"-Außengewindes (14) mindestens 50 mm beträgt.

3. S-Anschluss (10) nach Anspruch 1, **dadurch gekennzeichnet, dass** die Länge (1) des 1/2"-Außengewindes (14) mindestens 80 mm beträgt.

4. S-Anschluss (10) nach einem der Ansprüche 1 bis 3, **gekennzeichnet durch** einen wandseitigen Anschlussabschnitt, der das 1/2"-Außengewinde (14) aufweist und mit einer Rohrsäge kürzbar ist.

5. S-Anschluss (10) nach Anspruch 4, **dadurch gekennzeichnet, dass** sich das 1/2"-Außengewinde (14) über die gesamte Länge des wandseitigen Anschlussabschnitts erstreckt.

6. S-Anschluss (10) nach einem der Ansprüche 1 bis 5, **dadurch gekennzeichnet, dass** der Abstand der Längsachsen (20, 22) im Bereich von 3 mm bis 40 mm liegt.

7. S-Anschluss (10) nach einem der Ansprüche 1 bis 6, **dadurch gekennzeichnet, dass** der S-Anschluss (10) aus Messing besteht.

8. S-Anschluss (10) nach einem der Ansprüche 1 bis 7, **dadurch gekennzeichnet, dass** der S-Anschluss (10) verchromt ist.

9. S-Anschluss (10) nach einem der Ansprüche 1 bis 8, **dadurch gekennzeichnet, dass** das 1/2"-Außengewinde (14) eine Riffelung aufweist.

10. S-Anschluss (10) nach einem der Ansprüche 1 bis 9, **dadurch gekennzeichnet, dass** das 3/4"-Außengewinde (18) eine Länge im Bereich von 10 mm bis 30 mm aufweist.

11. S-Anschluss (10) nach einem der Ansprüche 1 bis 10, **dadurch gekennzeichnet, dass** sich das 3/4"-Außengewinde (18) über die gesamte Länge eines armaturseitigen Anschlussabschnitts des S-Anschlusses (10) erstreckt.

12. S-Anschluss (10) nach einem der Ansprüche 1 bis 11, **dadurch gekennzeichnet, dass** eine Wandstärke des S-Anschlusses (10) im Bereich des 1/2"-Außengewindes (14) und/oder im Bereich des 3/4"-Außengewindes (18) 1,5 mm bis 3 mm beträgt.

13. S-Anschluss (10) nach einem der Ansprüche 1 bis 12, **dadurch gekennzeichnet, dass** konzentrisch zu dem 3/4"-Außengewinde (18) ein 1/2"-Innengewinde angeordnet ist.

## Claims

1. An S-shaped connection (10) for connecting a water pipe (30) and a fitting (32) having
• a 1/2" external thread (14) for connecting to the water pipe (30) and
• a 3/4" external thread (18) for connecting to the fitting (32), wherein
• a longitudinal axis (20) of the 1/2" external thread (14) and a longitudinal axis (22) of the 3/4" external thread (18) are arranged parallel to and at a distance (d) from each other, **characterized in that**
• the 1/2" external thread (14) has a length (1) of at least 30 mm.

2. The S-shaped connection (10) according to claim 1, **characterized in that** the length (1) of the 1/2" external thread (14) is at least 50 mm.

3. The S-shaped connection (10) according to claim 1, **characterized in that** the length (1) of the 1/2" external thread (14) is at least 80 mm.

4. The S-shaped connection (10) according to one of claims 1 to 3, **characterized by** a wall-side connecting portion that has the 1/2" external thread (14) and can be shortened with a tube saw.

5. The S-shaped connection (10) according to claim 4, **characterized in that** the 1/2" external thread (14) extends over the entire length of the wall-side connecting portion.

6. The S-shaped connection (10) according to one of claims 1 to 5, **characterized in that** the distance between the longitudinal axes (20, 22) is in the range of 3 mm to 40 mm.

7. The S-shaped connection (10) according to one of claims 1 to 6, **characterized in that** the S-shaped connection (10) consists of brass.

8. The S-shaped connection (10) according to one of claims 1 to 7, **characterized in that** the S-shaped connection (10) is chromium-plated.

9. The S-shaped connection (10) according to one of claims 1 to 8, **characterized in that** the 1/2" external thread (14) has corrugation.

10. The S-shaped connection (10) according to one of claims 1 to 9, **characterized in that** the 3/4" external thread (18) has a length in the range of 10 mm to 30 mm.

11. The S-shaped connection (10) according to one of claims 1 to 10, **characterized in that** the 3/4" external thread (18) extends over the entire length of a fitting-side connecting portion of the S-shaped connection (10).

12. The S-shaped connection (10) according to one of claims 1 to 11, **characterized in that** a wall thickness of the S-shaped connection (10) in the region of the 1/2" external thread (14) and/or in the region of the 3/4" external thread (18) is 1.5 mm to 3 mm.

13. The S-shaped connection (10) according to one of claims 1 to 12, **characterized in that** a 1/2" internal thread is arranged concentrically with the 3/4" external thread (18).

## Revendications

1. Raccord en S (10) pour raccorder une conduite d'eau (30) à un élément de robinetterie (32) avec
• un filetage extérieur de ½" (14) pour raccorder la conduite d'eau (30) et
• un filetage extérieur de ¾" (18) pour raccorder l'élément de robinetterie (32), dans lequel
• un axe longitudinal (20) du filetage extérieur de ½" (14) et un axe longitudinal (22) du filetage extérieur de ¾" (18) sont disposés parallèlement et à une distance (d) l'un de l'autre, **caractérisé en ce que**
• le filetage extérieur de ½" (14) présente une longueur (1) d'au moins 30 mm.

2. Raccord en S (10) selon la revendication 1, **caractérisé en ce que** la longueur (1) du filetage extérieur de ½" (14) atteint au moins 50 mm.

3. Raccord en S (10) selon la revendication 1, **caractérisé en ce que** la longueur (1) du filetage extérieur de ½" (14) atteint au moins 80 mm.

4. Raccord en S (10) selon l'une des revendications 1 à 3, **caractérisé par** un segment de raccordement du côté de la paroi, qui présente le filetage extérieur de ½" (14) et qui peut être raccourci à l'aide d'une scie à tube.

5. Raccord en S (10) selon la revendication 4, **caractérisé en ce que** le filetage extérieur de ½" (14) s'étend sur toute la longueur du segment de raccordement du côté de la paroi.

6. Raccord en S (10) selon l'une des revendications 1 à 5, **caractérisé en ce que** la distance des axes longitudinaux (20,22) se situe dans la plage de 3 mm à 40 mm.

7. Raccord en S (10) selon l'une des revendications 1 à 6, **caractérisé en ce que** le raccord en S (10) est constitué de laiton.

8. Raccord en S (10) selon l'une des revendications 1 à 7, **caractérisé en ce que** le raccord en S (10) est chromé.

9. Raccord en S (10) selon l'une des revendications 1 à 8, **caractérisé en ce que** le filetage extérieur de ½" (14) présente un striage.

10. Raccord en S (10) selon l'une des revendications 1 à 9, **caractérisé en ce que** le filetage extérieur de ¾" (18) présente une longueur se situant dans la plage de 10 mm à 30 mm.

11. Raccord en S (10) selon l'une des revendications 1 à 10, **caractérisé en ce que** le filetage extérieur de ¾" (18) s'étend sur toute la longueur d'un segment de raccordement du côté de l'élément de robinetterie du raccord en S (10).

12. Raccord en S (10) selon l'une des revendications 1 à 11, **caractérisé en ce qu'**une épaisseur de paroi du raccord en S (10) est comprise entre 1,5 mm et 3 mm dans la zone du filetage extérieur de ½" (14) et/ou dans la zone du filetage extérieur de ¾" (18).

13. Raccord en S (10) selon l'une des revendications 1 à 12, **caractérisé en ce qu'**un filetage extérieur de ½" est disposé concentriquement par rapport au filetage extérieur de ¾" (18).
